# DEMANDE DE BREVET EUROPEEN

(11) **EP 1 303 022 A1**
(43) Date de publication de la demande: **16.04.2003**
(21) Numéro de dépôt: 01203864.2
(22) Date de dépôt: 12.10.2001
(51) Int. Cl.: H02J 7/02

(54) **Chargeur inductif pour objet portatif électronique tel que, notamment, une pièce d'horlogerie du type montre-bracelet**

(71) Demandeur: The Swatch Group Management Services AG, 2501 Biel (CH)
(72) Inventeur: Kinkio, Stéphane, 2000 Neuchâtel (CH); Kaitenrieder, Cédric, 2612 Cormont (CH)
(74) Mandataire: Thérond, Gérard Raymond

(57) **Abrégé**

La présente invention concerne un chargeur destiné à recharger par induction au moins un accumulateur d'objet électronique portatif tel que, en particulier, une pièce d'horlogerie du type montre-bracelet (6), une première inductance (40) constituant le primaire d'un transformateur de charge, tandis qu'une seconde inductance (36) placée dans un circuit de charge du ou des accumulateurs constitue le secondaire du transformateur, ce chargeur (1) étant caractérisé en ce qu'il comprend une embase (2) présentant un logement (38) destiné à recevoir au moins une partie (34) de l'objet portatif dans laquelle est logée l'inductance secondaire (36), ce logement étant agencé de façon que ledit objet portatif se positionne spontanément dans une position dans laquelle les inductances primaire (40) et secondaire (36) sont disposées en regard l'une de l'autre, afin d'assurer une charge optimale du ou des accumulateurs alimentant l'objet portatif et lui permettant de fonctionner.

## Description

La présente invention concerne un chargeur électrique permettant de recharger par induction le ou les accumulateurs d'un objet portatif électronique tel que, notamment, une pièce d'horlogerie du type montre-bracelet.

Il apparaît actuellement sur le marché des pièces d'horlogerie multifonctions du type montre-bracelet telles que des montres agenda, des montres téléphone, des montres GPS ou autres qui sont de plus en plus complexes. Ces montres multifonctions permettent en effet à leurs porteurs d'accéder, non seulement à diverses informations horaires, mais également à une multiplicité d'applications de type informatique qui peuvent, selon les cas, être stockées dans la montre, dans un ordinateur personnel (mieux connu sous sa dénomination anglo-saxonne "Personal Computer" ou "PC") ou bien être accessibles via Internet.

Outre le grand nombre de fonctions qu'elles sont capables de remplir, les montres du genre susmentionné présentent la particularité d'être, le plus souvent, fortes consommatrices d'énergie. Elles comprennent en effet typiquement un ou plusieurs microprocesseurs qui consomment passablement d'énergie, et l'échange de données entre de telles montres et une unité de traitement électronique distante telle qu'un ordinateur personnel ou PC se fait habituellement sans contact et sans fil, de sorte que la montre ne peut compter que sur ses propres réserves en énergie pour réaliser le transfert des données. C'est la raison pour laquelle ces montres sont, le plus souvent, alimentées, non pas par des piles jetables dont les capacités de stockage en énergie sont limitées, mais par des accumulateurs qui peuvent être périodiquement rechargés au moyen de chargeurs électriques prévus à cet effet.

La charge des accumulateurs peut se faire via des contacts ohmiques au moyen desquels la montre multifonction est connectée à son chargeur. Les inconvénients de tels contacts ohmiques sont cependant bien connus. En premier lieu, ils nuisent gravement à l'étanchéité de la montre qu'ils équipent, offrant un passage facile d'accès à l'eau, aux poussières et à l'humidité. Ils sont également très fragiles et peuvent être irrémédiablement endommagés, par exemple suite à une chute de l'objet portable. Enfin, ils doivent être positionnés avec précision relativement aux contacts correspondants portés par le chargeur, faute de quoi la charge des accumulateurs ne se fait pas ou de manière incomplète.

Pour remédier à ces inconvénients, on a recouru à des techniques de charge des accumulateurs par induction. Dans ce cas, le chargeur comprend un enroulement primaire d'un transformateur de recharge, tandis que l'enroulement secondaire du transformateur est placé dans le circuit de charge du ou des accumulateurs rechargeables de la montre.

Les systèmes de charge par induction du genre décrit ci-dessus ont comme principal avantage de permettre une charge des accumulateurs sans contact et sans fil. La montre, dépourvue de toute prise de raccordement, est donc parfaitement étanche. Pour assurer une charge complète des accumulateurs, il faut cependant s'assurer que les enroulements primaire et secondaire soient convenablement disposés l'un par rapport à l'autre.

La présente invention a pour but de répondre à cette exigence ainsi qu'à d'autres encore en procurant un chargeur d'accumulateurs simple d'emploi et garantissant une charge optimale de ces accumulateurs.

A cet effet, la présente invention concerne un chargeur destiné à recharger par induction au moins un accumulateur d'un objet électronique portatif tel que, en particulier, une pièce d'horlogerie du type montre-bracelet, un premier enroulement constituant le primaire d'un transformateur de charge, tandis qu'un second enroulement placé dans un circuit de charge du ou des accumulateurs constitue le secondaire du transformateur, ce chargeur étant caractérisé en ce qu'il comprend une embase présentant un logement destiné à recevoir au moins une partie de l'objet portatif dans laquelle est logé l'enroulement secondaire, ce logement étant agencé de façon que ledit objet portatif se positionne spontanément dans une position dans laquelle les enroulements du primaire et du secondaire du transformateur de charge sont disposés en regard l'un de l'autre, afin d'assurer une charge optimale du ou des accumulateurs alimentant l'objet portatif et lui permettant de fonctionner.

Grâce à ces caractéristiques, la présente invention procure un chargeur sur lequel il suffit juste de poser l'objet portatif dont les accumulateurs sont à recharger, ledit objet portatif adoptant ensuite automatiquement une position qui assure un couplage inductif optimum entre les enroulements primaire et secondaire du transformateur de charge, de façon à garantir la charge complète desdits accumulateurs. L'utilisateur n'est ainsi plus obligé de rechercher par tâtonnements et essais successifs la position de l'objet portatif qui permet de réaliser une charge complète des accumulateurs comme tel est le cas, notamment, avec les objets portatifs munis, pour la recharge de leurs accumulateurs, de contacts ohmiques femelles qu'il faut venir emboîter sur des contacts ohmiques mâles correspondants portés par le chargeur. L'utilisateur réalise ainsi un gain de temps appréciable et peut mettre son objet portatif à recharger sans prendre aucune précaution particulière.

Selon une caractéristique complémentaire de l'invention, le logement présente un jeu par rapport au volume de l'objet portatif, ce logement étant délimité par un fond qui limite le débattement vertical de l'objet portatif, et par une paroi frontale avant sensiblement verticale et par une paroi frontale arrière inclinée vers l'extérieur du volume délimité par ledit logement, de sorte que, sous l'effet de son poids, l'objet portatif pivote spontanément vers l'arrière de façon que les enroulements primaire et secondaire du transformateur de charge soient convenablement disposés en regard l'un de l'autre.

D'autres caractéristiques et avantages de la présente invention ressortiront plus clairement de la description détaillée qui suit d'un exemple de réalisation du chargeur selon l'invention, cet exemple étant donné à titre purement illustratif seulement, en liaison avec les dessins annexés dans lesquels :
- la figure 1 est une vue en perspective et à l'état fermé du chargeur conforme à la présente invention;
- la figure 2 est une vue en perspective et à l'état dissocié du chargeur de la figure 1, et
- la figure 3 est une vue en coupe verticale du chargeur de la figure 1.

La présente invention procède de l'idée générale inventive qui consiste à procurer un chargeur pour la charge par induction du ou des accumulateurs alimentant en énergie électrique un objet portatif tel que, en particulier, une pièce d'horlogerie, ce chargeur comprenant un logement ou cavité destinée à recevoir au moins la partie de l'objet portatif dans laquelle est logée une inductance secondaire et présentant une forme évasée qui permet à l'utilisateur de trouver sans aucune difficulté la position dudit objet portatif pour laquelle le couplage par induction entre les inductances primaire et secondaire, et donc la charge des accumulateurs, est optimale.

La présente invention va être décrite en liaison avec un objet portatif du type montre-bracelet. Il va néanmoins de soi que la présente invention peut, moyennant des modifications mineures qui sont à la portée de l'homme du métier ordinaire, s'appliquer à tout autre type d'objet portatif tel que, en particulier, un téléphone portable ou sans fil.

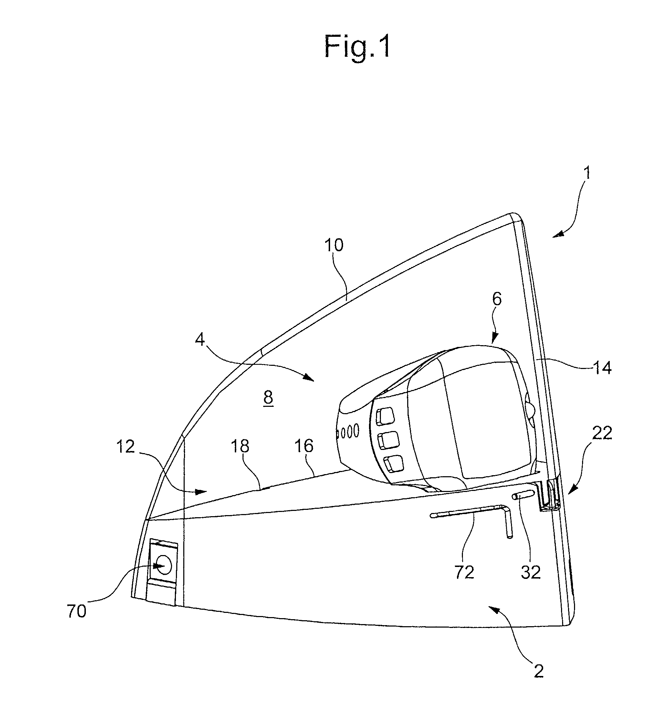

Le chargeur conforme à la présente invention est représenté en perspective et à l'état fermé sur la figure 1. Désigné dans son ensemble par la référence numérique générale 1, ce chargeur comprend une embase 2, par exemple de forme sensiblement triangulaire, et un couvercle 4 monté pivotant sur l'embase 2. Le chargeur 1 peut ainsi faire avantageusement office, non seulement de moyen pour recharger par induction le ou les accumulateurs alimentant en énergie électrique une pièce d'horlogerie telle qu'une montre-bracelet 6, mais également de présentoir et de coffret de rangement pour ladite montre-bracelet 6.

Le couvercle 4 a une forme prismatique. Il comprend une face avant 8 qui plonge vers l'avant de l'embase 2 et qui est prolongée, le long de ses bords longitudinaux 10, par deux faces latérales 12. Ces faces latérales 12 sont approximativement verticales et convergent l'une vers l'autre pour se rejoindre au niveau d'une nervure de raidissement 14 située à l'arrière de l'embase 2.

La face avant 8 du couvercle 4 présente, le long de son bord inférieur 16, un ergot 18 qui, en position fermée dudit couvercle 4, pénètre dans un trou 20 correspondant ménagé dans l'embase 2. Pour ouvrir le couvercle, l'utilisateur doit exercer une pression sur les faces latérales 12. Sous l'effet de cette pression, la face avant 8 du couvercle 4 se bombe suffisamment pour que l'ergot 18 puisse sortir du trou 20 dans lequel il étant logé. Il suffit alors à l'utilisateur de basculer le couvercle 4 pour pouvoir accéder à la montre 6.

Selon une première variante de réalisation non représentée au dessin, le couvercle 4 peut être monté pivotant sur l'embase 2 par clipsage, de sorte que, si l'utilisateur manoeuvre trop brusquement ledit couvercle 4 au risque de l'abîmer, celui-ci peut se déboîter.

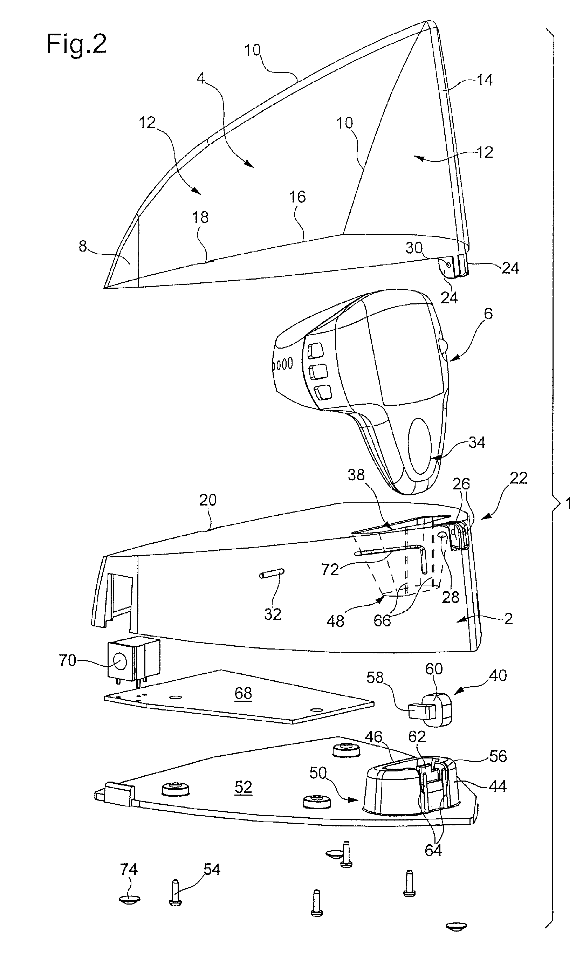

Selon une seconde variante de réalisation représentée sur la figure 2, le couvercle 4 est monté pivotant sur l'embase 2 par l'intermédiaire d'une charnière 22. Cette charnière 22 se compose de deux doigts 24 disposés dans le prolongement de la nervure de raidissement 14 et qui pénètrent dans deux rainures correspondantes 26 ménagées sur l'embase 2. Des trous traversants 28 et 30 sont prévus respectivement sur l'embase 2 et dans les doigts 24. Lors du montage du couvercle 4, les trous 28 et 30 viennent en regard les uns des autres, de sorte qu'une goupille 32 peut être chassée dans le passage formé par ces trous 28 et 30 pour la fixation dudit couvercle 4 sur l'embase 2.

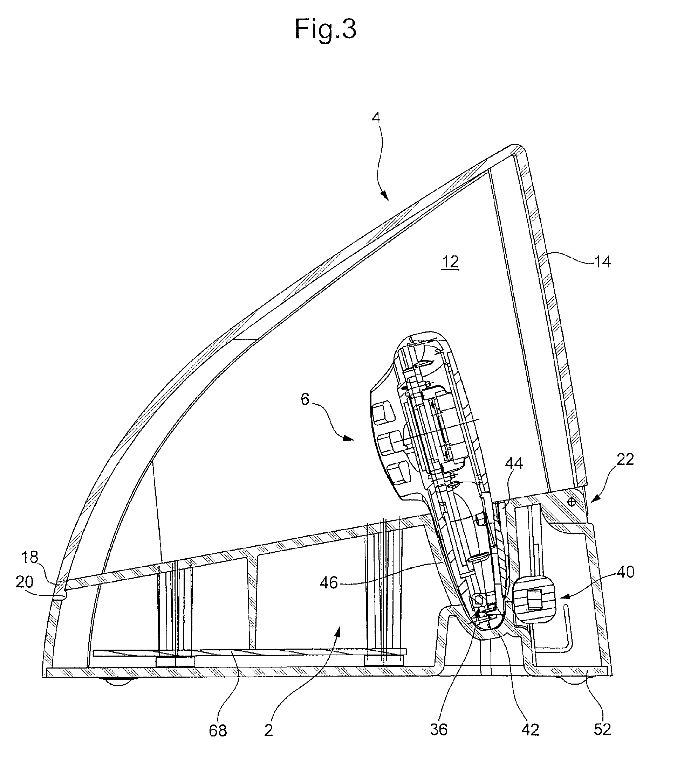

Comme on peut le voir sur les figures 2 et 3, la montre-bracelet 6 présente un appendice 34 dans lequel est logée l'inductance secondaire 36 d'un transformateur de charge. Cet appendice 34 est destiné à être engagé dans un logement correspondant 38 ménagé dans l'épaisseur de l'embase 2 et agencé de façon que ledit appendice 34 se positionne spontanément dans une position dans laquelle les inductances 36 et 40 du secondaire et du primaire du transformateur de charge sont disposées en regard l'une de l'autre, afin d'assurer une charge optimale du ou des accumulateurs alimentant la montre-bracelet 6 et lui permettant de fonctionner. Il va de soi que cet exemple est donné à titre purement illustratif seulement, et que le logement 38 pourrait être destiné à recevoir, par exemple la partie inférieure d'un téléphone mobile ou sans fil dans laquelle serait logée l'inductance secondaire.

Plus précisément, le logement 38 présente un jeu par rapport au volume de l'appendice 34 de la montre-bracelet 6. Il est délimité par un fond 42 (voir figure 3) qui limite le débattement vertical de la montre 6, et par une paroi frontale arrière 44 sensiblement verticale et une paroi frontale avant 46 inclinée vers l'extérieur du volume délimité par ledit logement 38. Ainsi, sous l'effet de son poids, la montre 6 pivote spontanément vers l'arrière de façon que les inductances primaire 40 et secondaire 36 qui constituent le transformateur de charge soient convenablement disposés en regard l'une de l'autre. Grâce à la forme évasée du logement 38, l'utilisateur n'est plus obligé de rechercher par essais successifs la position de la montre 6 qui permet de réaliser une charge complète des accumulateurs, car ladite montre 6 adopte automatiquement une position qui assure un couplage inductif optimum entre les inductances primaire 40 et secondaire 36.

Comme il ressort clairement de la figure 2, le logement 38 destiné à recevoir au moins en partie la montre-bracelet 6 est fait en deux parties 48 et 50, une première partie 48 étant faite d'une pièce avec l'embase 2 proprement dite, tandis que la seconde partie 50 se dresse sur la surface d'un élément 52 séparé qui fait office de fond de ladite embase 2. Lorsque le fond 52 et l'embase 2 sont assemblés, par exemple au moyen de vis 54, la partie supérieure 48 du logement 38 vient s'appuyer sur le rebord annulaire 56 de la partie inférieure 50 dudit logement.

L'inductance primaire 40 se compose d'un noyau en ferrite 58 en forme de U autour duquel est bobiné un enroulement 60. Un retrait 62 ménagé dans la surface latérale extérieure de la paroi frontale arrière 44 laisse un espace suffisant pour le logement de l'ensemble formé par le noyau 58 et l'enroulement 60. Des moyens de maintien sous la forme de deux tiges semi-rigides 64 permettent d'appliquer le noyau 58 contre la face en retrait 62 de la paroi frontale arrière 44. Deux autres tiges 66 ménagées dans la partie supérieure 48 du logement 38 viennent appuyer sur le noyau 58 afin de l'immobiliser verticalement lorsque le fond 52 et l'embase 2 sont assemblés. La relative élasticité des tiges 64 leur permet de s'adapter aux variations dimensionnelles du noyau 58. Bien entendu, selon une variante d'exécution simplifiée, le noyau 58 pourrait simplement être collé pour assurer son maintien fiable.

Un circuit imprimé 68 est disposé à l'intérieur de l'embase 2. Ce circuit imprimé porte, notamment, un connecteur 70 pour le branchement d'un adaptateur secteur (non représenté) permettant de relier le chargeur 1 au réseau de distribution d'électricité.

L'embase 2 comprend enfin des fentes 72 pour la circulation de l'air et le refroidissement de l'inductance primaire 40. D'autre part, des plots 74 réalisés en une matière plastique antidérapante sont classiquement collés sur la surface inférieure du fond 52 pour éviter que le chargeur 1 ne glisse lorsqu'il est posé sur une surface de travail.

Il va de soi que la présente invention n'est pas limitée au mode de réalisation qui vient d'être décrit, et que diverses modifications et variantes simples peuvent être envisagées par l'homme du métier sans sortir du cadre de la présente invention.

## Revendications

1. Chargeur destiné à recharger par induction au moins un accumulateur d'objet électronique portatif tel que, en particulier, une pièce d'horlogerie du type montre-bracelet (6), une première inductance (40) constituant le primaire d'un transformateur de charge, tandis qu'une seconde inductance (36) placée dans un circuit de charge du ou des accumulateurs constitue le secondaire du transformateur, ce chargeur (1) étant **caractérisé en ce qu'**il comprend une embase (2) présentant un logement (38) destiné à recevoir au moins une partie (34) de l'objet portatif dans laquelle est logée l'inductance secondaire (36), ce logement étant agencé de façon que ledit objet portatif se positionne spontanément dans une position dans laquelle les inductances primaire (40) et secondaire (36) sont disposées en regard l'une de l'autre, afin d'assurer une charge optimale du ou des accumulateurs alimentant l'objet portatif et lui permettant de fonctionner.

2. Chargeur selon la revendication 1, **caractérisé en ce que** le logement (38) présente un jeu par rapport au volume de ladite au moins une partie (34) de l'objet portatif qui est introduite dans ce logement (38), ledit logement (38) étant délimité par un fond (42) qui limite le débattement vertical de l'objet portatif, et par une paroi frontale arrière (44) et une paroi frontale avant (46) inclinée vers l'extérieur du volume délimité par le logement (38), de sorte que, sous l'effet de son poids, l'objet portatif pivote spontanément vers l'avant de façon que les inductances primaire (40) et secondaire (36) du transformateur de charge soient convenablement disposés en regard l'un de l'autre.

3. Chargeur selon la revendication 2, **caractérisé en ce qu'**il comprend des moyens de maintien de l'inductance primaire (40).

4. Chargeur selon la revendication 3, **caractérisé en ce que** les moyens de maintien comprennent au moins une tige semi-rigide (64) permettant d'appliquer l'inductance primaire (40) contre une face (62) ménagée en retrait dans la surface latérale extérieure de la paroi frontale arrière (44), et au moins une autre tige (66) qui vient appuyer sur ladite inductance (40) afin de l'immobiliser verticalement.

5. Chargeur selon l'une quelconque des revendications 1 à 3, **caractérisé en ce que** le logement (38) est fait en deux parties (48, 50), une première partie (48) étant faite d'une pièce avec l'embase (2), tandis que la seconde partie (50) se dresse sur la surface d'un élément (52) séparé qui fait office de fond de ladite embase (2).

6. Chargeur selon l'une quelconque des revendications 1 à 4, **caractérisé en ce que** l'embase (2) est munie d'un couvercle (4) comprenant une face avant (8) prolongée par deux faces latérales (12), l'ouverture de ce couvercle (4) étant réalisée en exerçant une pression sur lesdites faces latérales (12) de façon que, sous l'effet de cette pression, la face avant (8) se bombe pour qu'un ergot de verrouillage (18) puisse sortir d'un trou (20) dans lequel il est normalement logé en position fermée dudit couvercle (41).
